## Europäisches Patentamt

## European Patent Office

## Office européen des brevets

(19)

(11) Numéro de publication: **0015826**
**B1**

(12)

# FASCICULE DE BREVET EUROPEEN

(45) Date de publication du fascicule du brevet:
**01.02.84**

(51) Int. Cl.³: **G 01 B 11/275**

(21) Numéro de dépôt: **80400273.1**

(22) Date de dépôt: **27.02.80**

(54) Procédé pour contrôler le parallélisme des roues des trains avant et arrière de véhicules automobiles et appareil pour la mise en oeuvre de ce procédé.

(30) Priorité: **09.03.79 FR 7906118**

(43) Date de publication de la demande:
**17.09.80 Bulletin 80/19**

(45) Mention de la délivrance du brevet:
**01.02.84 Bulletin 84/5**

(84) Etats contractants désignés:
**AT BE CH DE GB IT LU NL SE**

(56) Documents cités:
**FR - A - 2 343 221**
**FR - A - 2 382 675**
**FR - A - 2 403 542**
**US - A - 4 126 943**

(73) Titulaire: **Etablissements M. Muller & Cie, 50-56, rue des Tournelles, F-75140 Paris Cedex 03 (FR)**

(72) Inventeur: **Coetsier, Paul, 4, Impasse Jean Macé, Chelles, Seine et Marne (FR)**

(74) Mandataire: **Tony-Durand, Serge, Cabinet Tony-Durand 22, Boulevard Voltaire, F-75011 Paris (FR)**

BUNDESDRUCKEREI BERLIN

**0 015 826**

Procédé pour contrôler le parallélisme des roues des trains avant et arrière
de véhicules automobiles et appareil pour la mise en œuvre de ce procédé

La présente invention a pour objet un procédé pour contrôler le parallélisme des roues des trains avant et arrière de véhicules automobiles, ainsi que pour mesurer le décalage axial entre les roues avant ou »set-back«.

Complémentairement, l'invention a pour objet un appareil pour la mise en œuvre de ce procédé.

On connaît différents types d'appareillages et de procédés pour contrôler les angles de pincement ou d'ouverture des roues avant et arrière d'un véhicule, notamment des appareils dans lesquels des projecteurs disposés devant le véhicule envoient des faisceaux lumineux transversalement au véhicule devant les roues avant, et des faisceaux longitudinaux parallèles aux roues avant du véhicule, qui sont réfléchis sur des miroirs placés au niveau des roues arrière.

Ainsi le brevet FR-A-2 382 675 divulgue un appareil de ce genre, mettant en œuvre une source laser et un récepteurcible placé sur chacune des roues avant.

Les roues arrière sont montées sur un essieu rigide et de ce fait parallèles, de sorte que cet appareil n'est pas conçu pour contrôler le parallélisme des roues arrière ni pour mesurer le »set-back«.

Ces dispositifs présentent différents inconvênients: ils manquent notamment de précision dans la mesure des angles.

En outre, pour mettre en œuvre les procédés connus, il faut au préalable aligner les roues avant sur les roues arrière, en tournant le volant du véhicule jusqu'à ce que l'on fasse coïncider les deux bissectrices des angles délimités par les roues avant et les roues arrière, au moyen d'un dispositif lumineux approprié.

L'invention a pour but de remédier à ces inconvénients en proposant un procédé permettant d'exécuter les différentes mesures angulaires rapidement avec une précision accrue, et ce quelles que soient les conditions d'éclairement du véhicule.

Conformément au procédé selon l'invention, on dispose au niveau de chaque roue avant un émetteur de rayon laser, on projette depuis l'émetteur associé à chaque roue avant un rayon laser transversalement devant le véhicule en direction de l'autre roue avant, ledit rayon venant frapper un récepteur, on projette depuis le même émetteur associé à l'une des roues avant un troisième rayon laser vers un miroir réfléchissant placé au niveau de la roue arrière correspondante et on reçoit le troisième rayon laser réfléchi sur un troisième récepteur associé à la même roue avant, puis sur chaque récepteur associé à un émetteur laser, on relève la distance entre le point d'impact du rayon laser et un zéro de référence.

Cependant le procédé selon l'invention est caractérisé en ce que:

— le récepteur associé à chacun des rayons laser projetés à partir de l'émetteur d'une roue avant, transversalement devant le véhicule, est disposé en avant de l'autre roue avant,

— on projette aussi, depuis l'émetteur de l'autre roue avant, un quatrième rayon laser vers un second miroir réfléchissant placé au niveau de la roue arrière correspondante et on reçoit le quatrième rayon laser réfléchi sur un quatrième récepteur associé à la même autre roue avant et on relève la distance entre lepoint d'impact dudit rayon laser et un zéro de référence,

— on introduit les distances relevées sur les quatre récepteurs dans un calculateur électronique qui, à partir de ces données ainsi que de la voie et de l'empattement du véhicule, détermine les angles de pincement ou d'ouverture des roues avant et arrière et le »set-back«,

— pour calculer les valeurs suivantes:

$\zeta_1$ = angle de pincement ou d'ouverture de la roue avant droite

$\zeta_2$ = angle de pincement ou d'ouverture de la roue avant gauche

$2\xi$ = angle de pincement ou d'ouverture total des roues du train arrière, tous ces angles étant considérés par convention comme positifs ou négatifs en fonction de leur positionnement de part et d'autre de parallèles à la bissectrice de l'angel formé par les plans axiaux verticaux des roues arrière, ladite bissectrice constituant l'axe de poussée du véhicule,

b = décalage entre les deux roues avant, considéré comme positif si la roue avant droite est en avant de la roue avant gauche, et négatif dans le cas contraire, ce décalage étant appelé »set-back« (ou inversement suivant la convention adoptée)

à partir des paramètres suivants:

c = distance entre les plans médians verticaux des roues avant et les plans verticaux contenant les rayons laser associés

v = voie

e = empattement du véhicule

on enregistre sur les deux récepteurs associés à chaque émetter laser, respectivement les données suivantes:

D = distance enregistrée sur le récepteur associé à la première roue avant, par exemple la roue droite, entre le point d'impact du premier rayon laser et le zéro de référence défini

2

par l'emplacement qu'aurait le point d'impact du laser si les angles de pincement ou d'ouverture des roues avant étaint nuls et si le véhicule n'avait pas de set-back,

G = distance homologue de D enregistrée sur le récepteur placé devant la seconde roue avant, par exemple la roue gauche,

D' = distance enregistrée sur le récepteur associé à la roue avant droite, entre le point d'impact du rayon laser réfléchi par le miroir placé au niveau de la roue arrière droite et un zéro de référence défini par l'intersection du plan vertical contenant le rayon laser avant sa réflexion sur le miroir et du plan vertical dudit récepteur,

G' = distance homologue de D' enregistrée sur le récepteur placé au niveau de la roue avant gauche et on résoud les quatre équations suivantes dans le calculateur électronique:

$$D = (v + 2c) \quad \zeta 2 + b + (\zeta 1 - \zeta 2)\, c$$

$$G = (v + 2c) \quad \zeta 1 - b - (\zeta 1 - \zeta 2)\, c$$

$$D' = 2e \quad (\zeta_1 - \xi)$$

$$G' = 2e \quad (\zeta_2 - \xi)$$

leurs solutions étant les suivantes:

$$\zeta^1 = \frac{D+G}{2(v+2c)} + \frac{D'-G'}{4e}$$

$$\zeta^2 = \frac{D+G}{2(v+2c)} - \frac{D'-G'}{4e}$$

$$2\xi = \frac{D+G}{v+2c} - \frac{D'+G'}{2e}$$

$$b = \frac{D-G}{2} + \frac{v(D'-G')}{4e}$$

L'appareil selon l'invention, prévu pour la mise en œuvre du procédé précité, comprend pour chacune des roues avant, un bras horizontal supporté par la roue correspondante et à l'intérieur duquel est disposé un émetteur laser associé à une lame séparatrice capable de subdiviser le rayon laser en un premier rayon horizontal situé dans la direction du rayon initial émis et réfléchi à angle droit sur un miroir transversalement devant le véhicule, et un second rayon réfléchi horizontalement à angle droit sur un second miroir, vers un troisième miroir porté par la roue arrière correspondante, le premier rayon frappant un premier récepteur monté en face du premier miroir sur l'extrémité du bras portée par l'autre roue avant, et le second rayon laser venant frapper un second récepteur monté sur le même bras, l'appareil comportant en outre un calculateur électronique programmé pour déterminer automatiquement les valeurs angulaires relatives au parallélisme des roues avant et arrière ainsi que le »set-back«, à partir des informations enregistrées sur les récepteurs, et ce en résolvant les équations suivantes:

$$D = (v + 2c) \quad \zeta 2 + b + (\zeta 1 - \zeta 2)\, c$$

$$G = (v + 2c) \quad \zeta 1 - b - (\zeta 1 - \zeta 2)\, c$$

$$D' = 2e \quad (\zeta 1 - \xi)$$

$$G' = 2e \quad (\zeta 2 - \xi)$$

Dans une forme de réalisation avantageuse, les autre récepteurs montés sur les bras sont des barrettes de diodes.

Ainsi, pour déterminer les différents paramètres en cause, il suffit de lire les distances sur les récepteurs entre les points d'impact des rayons laser, et les zéros de référence, le calculateur électronique déterminant les angles de pincement ou d'ouverture à partir des distances relevées sur les récepteurs.

L'utilisation d'émetteurs laser permet d'exécuter les mesures avec une très grande précision, et ce quelles que soient les conditions d'éclairement.

D'autres particularités et avantages de l'invention apparaîtront au cours de la description qui va suivre. Aux dessins annexés, donnés à titre d'exemples non limitatifs, on a représenté deux formes de réalisation du procédé et de l'appareil selon l'invention.

La figure 1 est une vue en perspective simplifiée des trains avant et arrière d'un véhicule sur lesquels sont accrochés les éléments constitutifs d'un premier mode de réalisation de l'appareil selon l'invention;

La figure 2 est une vue en perspective partielle, à échelle agrandie, de l'appareil représenté à la figure 1;

La figure 3 est une vue en élévation schématique du bras de l'appareil de la figure 2, représentant les trajets optiques des rayons laser émis à partir de ce bras;

La figure 4 est un schéma représentant de manière simplifiée les trajets optiques des rayons laser ainsi que certains angles pouvant être déterminés au moyen de l'appareil de mise en œuvre du procédé selon l'invention;

La figure 4A est une demie-vue à échelle agrandie correspondant à la moitié supérieure de la figure 4, et relative par conséquent au train avant du véhicule;

La figure 4B est une vue analogue à la figure 4A, à échelle agrandie et correspondant au train arrière du véhicule;

La figure 5 est une vue analogue à la figure 4B, illustrant les différents angles à mesurer dans le cas où la voie arrière du véhicule est différente de sa voie avant;

La figure 6 est une vue schématique en élévation longitudinale, analogue à la figure 3, représentant une seconde forme de réalisation de l'appareil selon l'invention, pour la mesure du »crabe« c'est-à-dire de la distance entre les bissectrices des angles déterminés par les roues avant et les roues arrière lorsque celles-ci sont parallèles;

La figure 7 est une vue en perspective partielle représentant un roue arrière pourvue d'un récepteur conforme à la seconde forme de réalisation représentée à la figure 6.

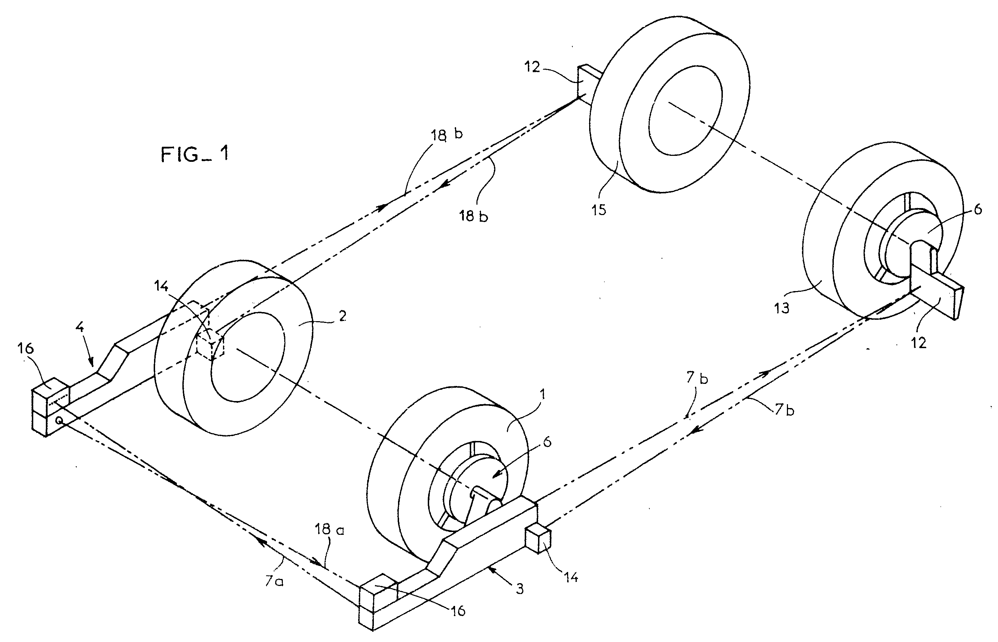

En se reportant aux figures 1 à 3, on voit une première forme de réalisation de l'appareil visé par l'invention, qui est destiné au contrôle du parallélisme des roues des trains avant et arrière d'un véhicule automobile, ainsi qu'à la mesure du décalage axial entre les roues avant ou »set-back«.

Pour chacune des roues avant 1, 2, l'appareil comprend un bras sensiblement horizontal 3, 4 supporté par la roue correspondante 1, 2, et à l'intérieur duquel est disposé un émetteur laser 5. Le boîtier allongé constitutif du bras 3 ou 4, est porté par la jante de la roue associée, par l'intermédiaire d'un dispositif d'accrochage 6 connu en soi et qui ne sera donc pas décrit.

Dans chaque bras 3, 4, l'émetteur laser 5 est orienté de façon à émettre un rayon 7 vers l'avant du véhicule, ce rayon étant pratiquement horizontal. A chaque émetteur 5, est associée une lame séparatrice 8, capable de subdiviser le rayon laser 7 en un premier rayon horizontal 7a qui traverse la lame et est situé dans la direction du rayon initial 7 émis, et est réfléchi à angle droit sur un premier miroir 9, transversalement devant le véhicule: la lame séparatrice 8 subdivise en second lieu le rayon initial 7 en un second rayon 7b, formant un angle de 90° avec le rayon intial 7, puis ce rayon 7b est à son tour réfléchi à angle droit sur un second miroir 11, vers un troisième miroir 12 porté par la roue arrière correspondante 13 (roue arrière gauche correspondant à la roue avant gauche 1).

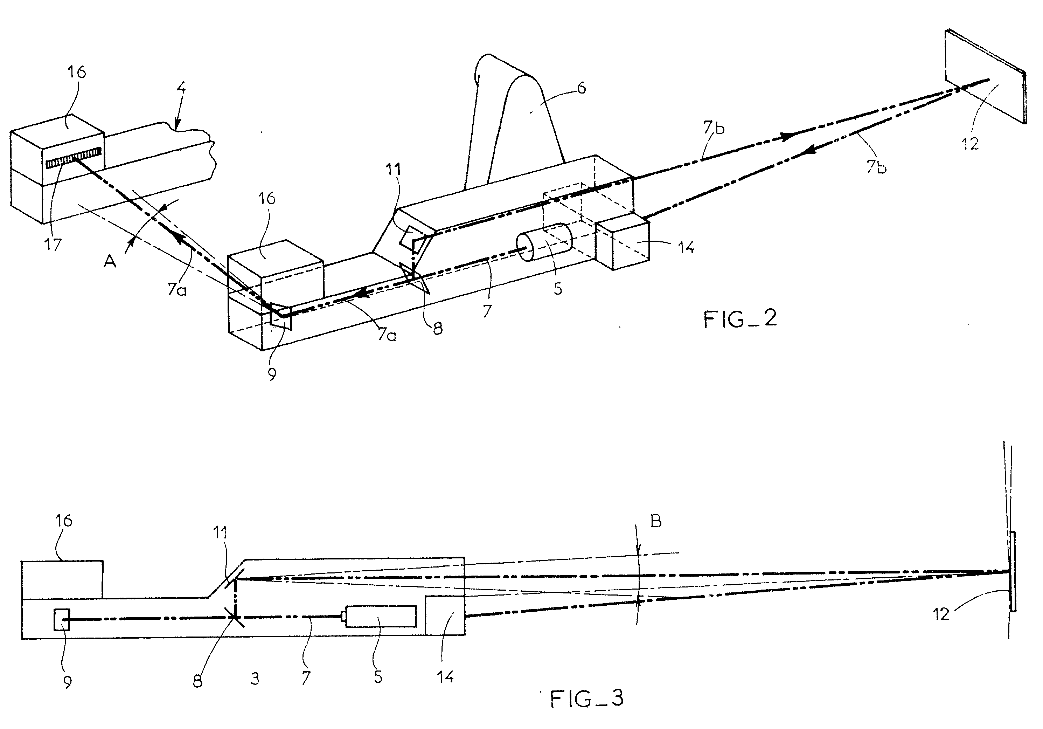

Comme on le voit aux figures 1 et 2, le premier rayon 7a est réfléchi avec un angle d'incidence de 45° sur le miroir 9 placé verticalement, de sorte que le rayon 7a réfléchi par le miroir 9 frappe un premier récepteur 16 monté en face du premier miroir 9, sur l'extrémité du bras 4 porté par la seconde roue avant 2. Le second rayon laser 7b, réfléchi horizontalement par le miroir 11 incliné à 45° sur la verticale, vient frapper un second récepteur 14 monté transversalement sur le bras 3, 4. Chaque miroir 12 est supporté par la roue arrière associée 13, 15 au moyen d'un dispositif d'accrochage 6 analogue aux dispositifs utilisés pour accrocher les bras 3 aux roues avant 1, 2.

La lame séparatrice 8 et le miroir 11 sont chacuns inclinés de 45° par rapport au rayon venant les frapper dans l'exemple décrit, mais il est possible de les incliner d'une autre valeur telle que le rayon réfléchi vers l'arrière du véhicule soit toujours sensiblement horizontal. La seule condition nécessaire est que la lame séparatrice 8 et le miroir 11 fassent un angle droit.

Chaque récepteur 16 monté sur un bras 3 devant les roues avant, comporte un élément récepteur proprement dit 17, constitué dans l'exemple représenté par une barrette horizontale de diodes, pouvant comporter par exemple une centaine de diodes. Il en est de même pour les récepteurs 14.

Dans ces conditions, on voit en particulier aux fig. 2 et 3, les trajets optiques suivis par les deux rayons 7a et 7b issus de la lame séparatrice 8. Le premier rayon 7a est réfléchi à angle droit par le miroir 9, et vient frapper la barrette de diodes 17, à un point d'impact situé à une distance d'un zéro de référence, qui est fonction entre autres, de l'angle de pincement ou d'ouverture de la roue avant gauche 1. Il en est de même pour le rayon laser 18a issu du bras 4 porté par la roue avant droite 2.

Le second rayon 7b réfléchi par le miroir 12 est reçu sur la barrette de diodes du récepteur 14, à une certaine distance d'un point de référence, le même processus se répétant pour le miroir non représenté 12 associé à la roue arrière droite 15.

L'appareil selon l'invention comporte complémentairement un calculateur électronique non représenté, programmé pour déterminer automatiquement les valeurs angulaires relatives au parallélisme des roues avant et arrière 1, 2, 13, 15, ainsi que le »set-back« à partir des informations enregistrées sur les récepteurs 14 et 16.

Le »set-back« est défini comme le décalage existant entre les roues avant, la roue avant droite

4

pouvant être décalée en avant ou en arrière de la roue avant gauche.

Chaque bras 3, 4 est équipé d'un dispositif de balayage permettant aux rayons laser d'effectuer un balayage angulaire dans un plan perpendiculaire à son axe. Ainsi, on voit sur la figure 2 que le rayon transversal 7a issu de l'émetteur 5 porté par la roue avant gauche, peut exécuter un balayage angulaire A dans un plan vertical, ce qui lui permet de frapper les diodes de la barrette 17 quel que soit le carrossage de la roue avant 1. Le second rayon 7b dirigé vers l'arrière, peut de son côté exécuter un balayage B (figure 3) dont les limites correspondent aux limites du miroir réflecteur 12.

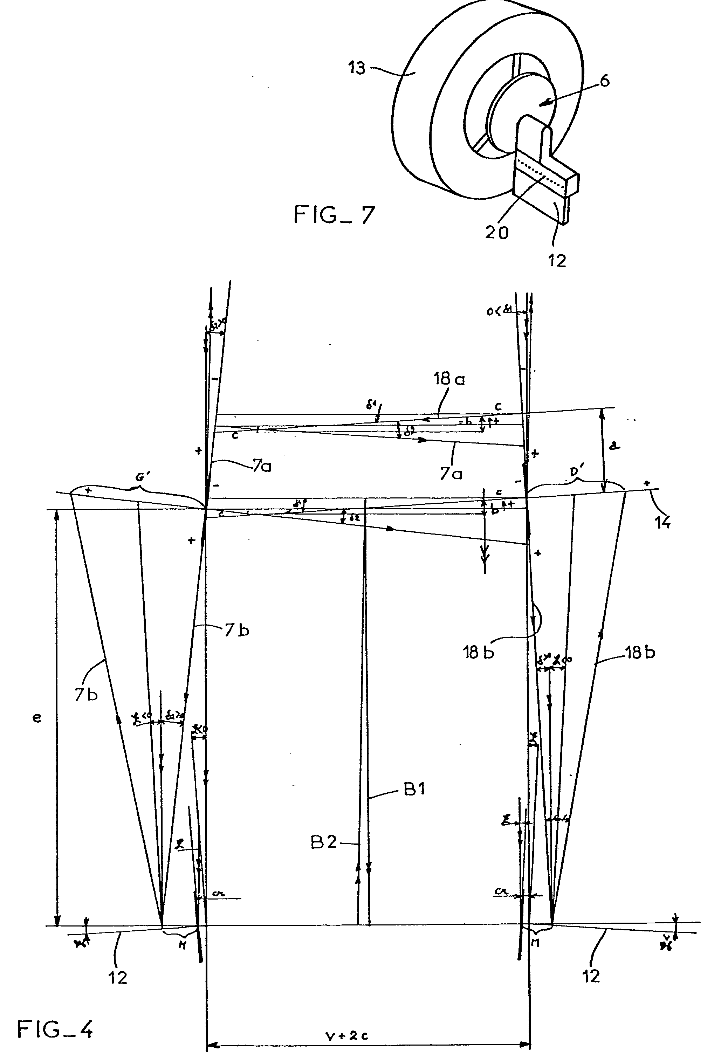

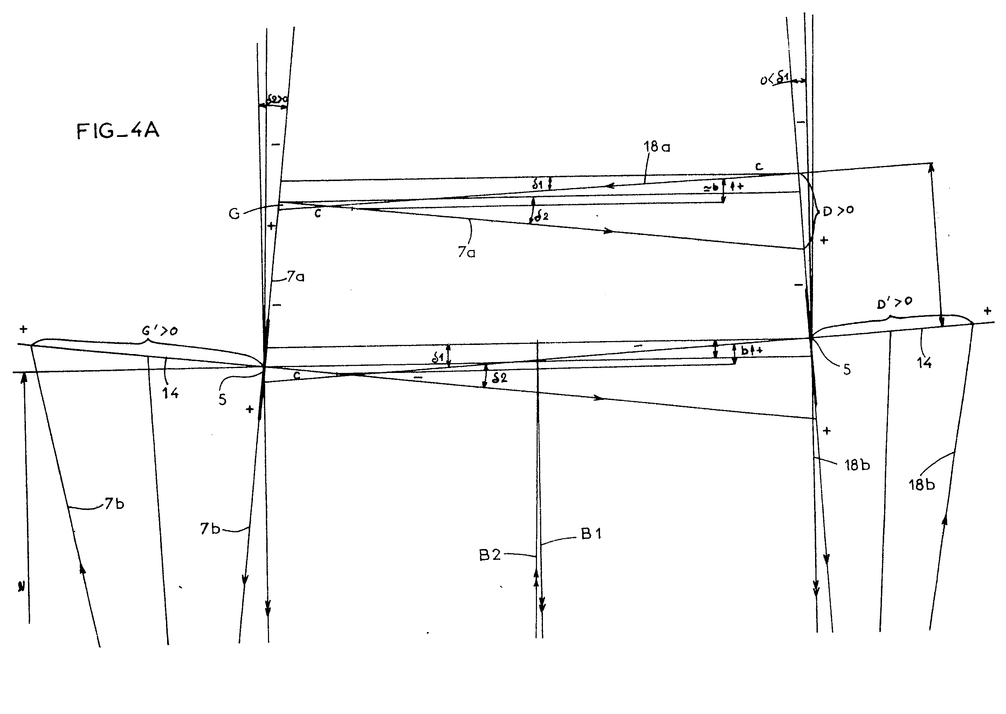

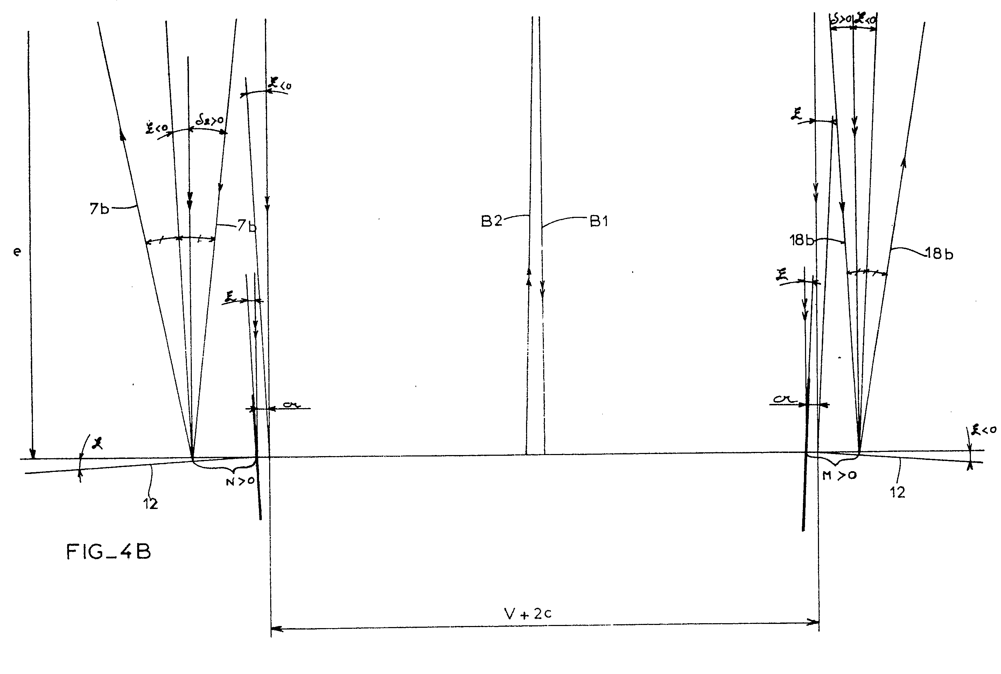

On définira maintenant, en se référant à la figure 4, l'ensemble des paramètres pouvant être contrôlés au moyen de l'appareillage qui vient d'être décrit.

### Définition des valeurs angulaires et autres paramètres mesurables par l'appareil selon l'invention

On a représenté dans un plan horizontal sur la figure 4, les trajets optiques suivis par les rayons lasers 7a, 7b issus de l'émetteur 5 porté par la roue avant gauche 1. Les mêmes rayons laser issus de l'émetteur 5 porté par la roue avant droite 2 sont référencées respectivement 18a et 18b.

On définira tout d'abord les données suivantes:

— v est la voie du véhicule, c'est-à-dire la distance entre les roues d'un même essieu;
— c est la distance entre le plan médian vertical d'une roue et le plan vertical parallèle passant par l'axe de l'émetteur associé 5, et contenant les rayons 7a, 7b compris entre l'émetteur 5 et les miroirs 9 et 12;
— B1 est la bissectrice de l'angle délimité par les plans verticaux médians des roues arrière 13, 15;
— B2 est la bissectrice de l'angle délimité par les plans verticaux médians des roues avant 1, 2.

Sur le schéma de la figure 4, B1 porte une double flèche dirigée vers l'arrière, de même que toutes les droites parallèles à cette bissectrice B1.

B2 et toutes les droites parallèles à cette bissectrice B2 sont repérables par une double flèche dirigée vers l'avant du véhicule.

— e est l'empattement du véhicule, c'est-à-dire la distance entre ses essieux avant et arrière.

Sur les figures 4, 4A et 4B on a par ailleurs porté les paramètres suivants:

D = distance entre le point d'impact du premier rayon laser 7a et le zéro de référence défini par l'emplacement qu'aurait le point d'impact du laser siles angles de pincement ou d'ouverture des roues avant étaient nuls et si le véhicule n'avait pas de »set-back«.

Sur la figure 4A, on voit que la valeur D est égale à la distance entre le point d'impact du rayon 7a et le point d'incidence à angle droit, du rayon 18b sur le miroir réflecteur placé à l'extrémité avant du bras correspondant.

La distance G est la distance homologue de D lue sur le récepteur 17 du bras 3 porté par la roue avant gauche.

D' est la distance enregistrée sur le second récepteur 14 faisant partie du bras 4 porté par la roue avant droite 2, entre le point d'impact du rayon laser 18b réfléchi par le miroir 12 placé au niveau de la roue arrière droite et un zéro de référence défini par l'intersection du plan vertical contenant le rayon laser 18b avant sa réflexion par le miroir 12, et du plan vertical du second récepteur 14. Cette valeur D' est portée sur la figure 4A.

G' est la distance homologue de D', enregistrée sur le second récepteur 14 placé au niveau de la roue avant gauche 1.

N est la distance entre le point d'impact du rayon 7b sur le miroir 12 et le plan vertical parallèle au plan vertical médian de la roue arrière gauche, dont il est séparé par la distance c (voir figure 4).

M (figure 4B) est la distance correspondant à N pour la roue arrière droite.

### Différences de valeurs angulaires et paramètres à contrôler

$\delta 1$ = angle de pincement (positif) ou d'ouverture (négatif) de la roue avant droite
$\delta 2$ = angle de pincement (positif) ou d'ouverture (négatif) de la roue avant gauche
$2\xi$ = angle de pincement ou d'ouverture total des roues du train arrière; ces angles sont considérés par convention, comme positifs ou négatifs en fonction de leur positionnement de part et d'autre de parallèles à la bissectrice B1, cette bissectrice constituant l'axe de poussée du véhicule.

5

Sur la figure 4A on voit que $\delta 1$ est situé à l'intérieur de la parallèle à la bissectrice B1 qui passe par le point d'émission de l'émetteur laser 5, $\delta 1$ étant par conséquent positif. De même, on voit que $\delta 2$ se situe à l'intérieur d'une parallèle à la bissectrice B1 passant par le point d'émission du rayon laser, et est par conséquent positif.

$\xi$ de la roue arrière gauche s'étend à l'extérieur de la parallèle à la bissectrice B1 qui passe par le point de réflexion sur le miroir 12 du rayon 7b de l'émetteur 5 associé à la roue avant gauche, de sorte que la roue arrière gauche présente un angle d'ouverture. La roue arrière droite présente la même disposition.

b = décalage entre les deux roues avant (voir figure 4A) ou »set-back« considérés par exemple comme positif si la roue avant droite est en avant de la roue avant gauche, et négatif dans le cas contraire.

Dans l'exemple représenté, b est positif, la roue vanat droite étant située en avant de la roue avant gauche.

Ainsi, les valeurs lues sur les récepteurs sont D, G, D', G' avec les signes portés sur la figure 4A.

On peut montrer géométriquement que dans ces conditions, l'on peut définir les équations suivantes aux infiniments petits près:

$$D = (v + 2c) \quad \delta 2 + b + (\delta 1 - \delta 2) c$$

$$G = (v + 2c) \quad \delta 1 - b - (\delta 1 - \delta 2) c$$

$$D' = 2e \quad (\delta 1 - \xi)$$

$$G' = 2e \quad (\delta 2 - \xi)$$

leurs solutions étant les suivantes:

$$\delta 1 = \frac{D+G}{2(v+2c)} + \frac{D'-G'}{4e}$$

$$\delta 2 = \frac{D+G}{2(v+2c)} - \frac{D'-G'}{4e}$$

$$2\xi = \frac{D+G}{v+2c} - \frac{D'+G'}{2e}$$

$$b = \frac{D-G}{2} + \frac{v(D'-G')}{4e}$$

Toutes ces opérations sont exécutées automatiquement par le calculateur programmé faisant partie de l'appareil selon l'invention. L'affichage des résultats des angles de pincement ou d'ouverture de train avant et du train arrière ainsi que du »set-back« b est réalisé sur un écran vidéo, ces angles étant donnés en degrés et minutes.

Il convient de remarquer que le déport latéral c est dû à la demi-largeur d'un pneumatique comme indiqué, à la largeur du porte-projecteur, mais aussi à la demi-largeur du projecteur. A titre d'exemple numérique, le déport latéral c dû à un porte-projecteur, à une demi-largeur de projecteur, et à une demi-largeur de pneumatique peut être de 205 mm environ.

Pour chaque véhicule, on introduit dans la mémoire du calculateur les facteurs suivants: voie v, empattement e, angle de pincement ou d'ouverture total des roues avant avec la tolérance en degrés, donnés par le constructeur, angle de pincement ou d'ouverture total des roues arrière avec la tolérance en dégrés, donné par le constructeur, ces dernières valeurs pouvant être introduites sous forme de cotes maxi-mini.

L'appareil indique sur l'écran vidéo les valeurs de $\delta 1$, $\delta 2$, $2\xi$ b.

Un avantage important du procédé et de l'appareil de contrôle du parallélisme qui vient d'être décrit, est qu'il évite l'obligation préalable d'alignement des roues avant sur les roues arrière en faisant coincider leurs deux bissectrices B1 et B2, ce qui réduit le temps nécessaire à la mesure des différents angles, et simplifie les opérations.

La mémoire du calculateur contient pour chaque véhicule testé. les fourchettes de valeurs entre lesquelles doit normalement se situer le paramètre considéré. De ce fait, on peut afficher également les corrections à effectuer sur l'écran, en fonction des différences entre les valeurs relevées et les limites des fourchettes prévues par le constructeur.

On obtient ainsi le tableau suivant:

Il est également possible d'utiliser l'appareil et le procédé selon l'invention pour réaliser le dévoilage d'une roue, par exemple d'une roue avant. Pour ce faire, on procède de la manière suivante:

On lève le véhicule, on fait tourner la roue avant dans le sens de marche avant du véhicule et par l'intermédiaire des valeurs D' (ou G') lues sur le récepteur, on détermine $\delta1$ moyen (ou $\delta2$ moyen) sachant que lors de cette opération $\xi$ reste constant:

$$D' = 2\,e\,(\delta_1 - \xi)$$

$$\delta_1 \text{ moyen } = \frac{D' \text{ maxi} + D' \text{ mini}}{4\,e} + \xi$$

$$G' = 2\,e\,(\delta_2 - \xi)$$

$$\delta_2 \text{ moyen } = \frac{G' \text{ maxi} + G' \text{ mini}}{4\,e} + \xi$$

puis on continue à tourner la roue jusqu'à ce qu'elle soit en position de $\delta1$ moyen (ou $\delta_2$ moyen), on repose alors le véhicule sur le sol avec la roue dans cette position, après quoi le voile moyen est horizontal et le voile maximum est vertical, ce qui évite d'influencer le parallélisme.

Pour exécuter le dévoilage d'une roue arrière, on opère de façon pratiquement analogue:

On lève le véhicule, on tourne dans le sens de marche avant du véhicule, puis par l'intermédiaire des valeurs D' (ou G') lues sur les récepteurs, on détermine $\xi$ moyen, pour chaque roue arrière, sachant que lors de l'opération, $\delta1$ ($\delta2$) est constant:

$$D' = 2\,e\,(\delta_1 - \xi)$$

$$\xi \text{ moyen } = \delta_1 - \frac{D' \text{ mini} + D' \text{ maxi}}{4\,e}$$
(roue arrière droite)

7

$$G' = 2e\,(\delta_2 - \xi)$$

$$\xi \text{ moyen} = \delta_2 - \frac{G'\text{ mini} + G'\text{ maxi}}{4\,e}$$
(roue arrière
gauche)

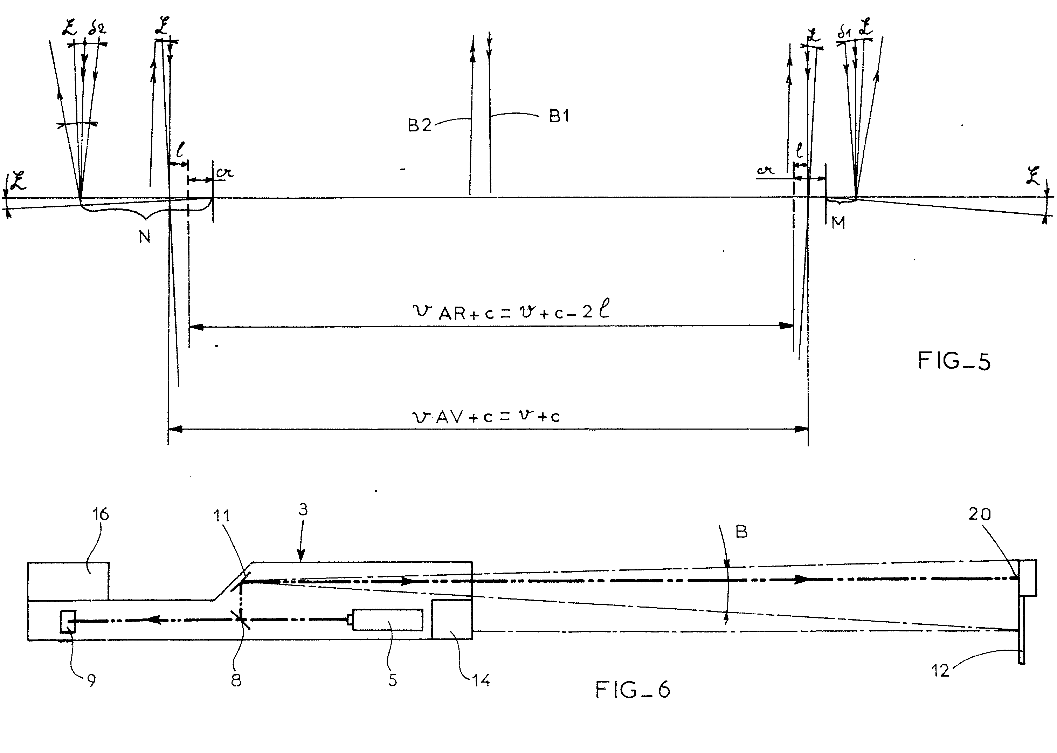

On a représenté aux figures 6 et 7 un second mode de réalisation de l'appareil, permettant de contrôler outre les paramètres angulaires précités et le »set-back«, un paramètre supplémentaire: le »crabe«.

Le »crabe« cr est une distance exprimée en millimètres, égale à la distance entre les bissectrices B1 et B2 des angles déterminés par les roues arrière et avant lorsque ces bissectrices sont parallèles. Le »crabe« cr est représenté à la figure 4B.

Le »crabe« de la roue arrière gauche est négatif, lorsque cette roue est déportée vers la gauche par rapport à la roue avant gauche, lorsque les voies avant et arrière sont identiques, comme cela est le cas sur la figure 4B. Ce déport latéral est évidemment le même pour la roue arrière droite. Cela signifie que globalement la bissectrice formée sur les roues arrière est à gauche de la bissectrice formée sur les roues avant lorsque ces bissectrices sont parallèles.

Pour permettre la mesure de ce »crabe«, les miroirs 12 des roues arrière sont complétés par des barrettes de diodes 20 (figures 6 et 7), qui peuvent être balayées par le rayon laser correspondant 7b (ou 18b).

Les signaux fournis permettent de déterminer les distances N et M (figure 4B).

En effet, on peut vérifier que:

$$N = e\,\delta2 + cr + I$$
$$M = e\,\delta1 - cr + I$$

Le »crabe« cr étant exprimé en millimètres, et avec

$$I = \frac{\text{voie\ avant} - \text{voie arrière}}{2}$$

ce qui perment d'obtenir la valeur du »crabe«

$$cr = \frac{(N - M) - e\,(\delta_2 - \delta_1)}{2}$$

cette valeur cr est également affichée sur l'écran vidéo de l'appareil.

L'ensemble des valeurs pouvant être ainsi déterminées (angles de pincement ou d'ouverture des roues avant et arrière, »set-back« et crabe) peut être complémentairement indiqué sur une imprimante qui délivre un ticket en même temps que ces valeurs sont affichées sur l'écran.

Il est possible de stocker dans la mémoire du calculateur, un fichier relatif aux données de tous les types de véhicules pouvant être testés. Lorsque l'opérateur doit contrôler un véhicule dont les caractéristiques sont contenues en mémoire, il lui suffit d'entrer sur un clavier le code de la voiture testée, après quoi l'opérateur procède au contrôle.

Dans l'exemple illustré à la figure 5, on a représenté les différentes valeurs angulaires relatives à un train arrière, dans le cas où les voies avant et arrière du véhicule sont différentes. I étant la moitié de la différence entre la voie avant et la voie arrière, on a dans ce cas:

voie arrière + c = v + c − 2 I
voie avant + c = v + c

L'invention n'est pas limitée aux formes de réalisation décrites et peut comporter de nombreuses variantes d'exécution.

Il est également possible, afin d'éviter le stockage des données pour chaque type de véhicule testé, d'entrer manuellement par l'intermédiaire d'un clavier les caractéristiques du véhicule à contrôler.

L'enregistrement des variations de parallélisme pour différents états de compressions de la suspension du véhicule, afin de permettre le réglage de la crémaillère de direction, est également possible avec cet appareil.

**Revendications**

1. Procédé pour contrôler le parallélisme des roues des trains avant et arrière de véhicules automobiles ainsi que pour mesurer le décalage axial entre les roues avant ou »set-back«, dans lequel on dispose au niveau de chaque roue avant (1, 2) un émetteur de rayon laser (5), on projette depuis l'émetteur (5) associé à chaque roue avant (1, 2) un rayon laser (7a, 18a) transversalement devant le véhicule en direction de l'autre roue avant, le dit rayon venant frapper un récepteur (16), on projette depuis le même émetteur (5) associé à l'une des roues avant (1) un troisième rayon laser (7b) vers un miroir réfléchissant (12) placé au niveau de la roue arrière correspondante (13) et on reçoit le troisième rayon laser réfléchi (7b) sur un troisième récepteur (14) associé à la même roue avant (1), puis sur chaque récepteur associé à un émetteur laser, on relève la distance entre le point d'impact du rayon laser et un zéro de référence, caractérisé en ce que:

— le récepteur (16) associé à chacun des rayons laser (7a, 18a) projetés à partir de l'émetteur d'une roue avant (1, 2), transversalement devant le véhicule, est disposé en avant de l'autre roue avant (2, 1),

— on projette aussi, depuis l'émetteur de l'autre roue avant (2), un quatrième rayon laser (18b) vers un second miroir réfléchissant (12) placé au niveau de la roue arrière correspondante (15) et on reçoit le quatrième rayon laser réfléchi (18b) sur un quatrième récepteur (14) associé à la même autre roue avant (2) et on relève la distance entre le point d'impact dudit rayon laser (18b) et un zéro de référence,

— on introduit les distances relevées sur les quatre récepteurs dans un calculateur électronique qui, à partir de ces données ainsi que de la voie et de l'empattement du véhicule, détermine les angles de pincement ou d'ouverture des roues avant et arrière et le »set-back«,

— pour calculer les valeurs suivantes:

$\zeta_1$ = angle de pincement ou d'ouverture de la roue avant droite

$\zeta_2$ = angle de pincement ou d'ouverture de la roue avant gauche

$2\xi$ = angle de pincement ou d'ouverture total des roues du train arrière, tous ces angles étant considérés par convention comme positifs ou négatifs en fonction de leur positionnement de part et d'autre de parallèles à la bissectrice de l'angle formé par les plans axiaux verticaux des roues arrière, ladite bissectrice constituant l'axe de poussée du véhicule,

b = décalage entre les deux roues avant, considéré comme positif si la roue avant droite est en avant de la roue avant gauche, et négatif dans le cas contraire, ce décalage étant appelé »set-back« (ou inversement suivant la convention adoptée)

à partir des paramètres suivants:

c = distance entre les plans médians verticaux des roues avant et les plans verticaux contenant les rayons laser associés

v = voie

e = empattement du véhicule

on enregistre sur les deux récepteurs associés à chaque émetteur laser, respectivement les données suivantes:

D = distance enregistrée sur le récepteur (16) associé à la première roue avant, par exemple la roue droite (2), entre le point d'impact du premier rayon laser (7a) et le zéro de référence défini par l'emplacement qu'aurait le point d'impact du laser si les angles de pincement ou d'ouverture des roues avant étaient nuls et si le véhicule n'avait pas de set-back,

G = distance homologue de D enregistrée sur le récepteur (16) placé devant la seconde roue avant, par exemple la roue gauche (1),

D' = distance enregistrée sur le récepteur (14) associé à la roue avant droite (2), entre le point d'impact du rayon laser réfléchi par le miroir (12) placé au niveau de la roue arrière droite (15) et un zéro de référence défini par l'intersection du plan vertical contenant le rayon laser (18b) avant sa réflexion sur le miroir (12) et du plan vertical dudit récepteur,

G' = distance homologue de D' enregistrée sur le récepteur (14) placé au niveau de la roue avant gauche (1) et on résoud les quatre équations suivantes dans le calculateur électronique:

$$D = (v + 2c) \quad \zeta 2 + b + (\zeta 1 - \zeta 2) c$$

$$G = (v + 2c) \quad \zeta 1 - b - (\zeta 1 - \zeta 2) c$$

$$D' = 2e \quad (\zeta_1 - \xi)$$

$$G' = 2e \quad (\zeta_2 - \xi)$$

leurs solutions étant les suivantes:

$$\zeta^1 = \frac{D+G}{2\,(v+2\,c)} + \frac{D'-G'}{4\,e}$$

$$\zeta^2 = \frac{D+G}{2\,(v+2\,c)} - \frac{D'-G'}{4\,e}$$

$$2\,\xi = \frac{D+G}{v+2\,c} - \frac{D'+G'}{2\,e}$$

$$b = \frac{D-G}{2} + \frac{v(D'-G')}{4\,e}$$

2. Procédé selon la revendication 1, dans lequel on réalise le dévoilage d'une roue avant, caractérisé en ce qu'on lève le véhicule, on fait tourner la roue avant dans le sens de marche avant du véhicule, et par l'intermédiaire des valeurs D' (ou G') lues sur les récepteurs, on détermine $\zeta_1$ moyen (ou $\zeta_2$ moyen) sachant que lors de cette opération $\xi$ reste constant:

$$D' = 2\,e\,(\zeta_1 - \xi)$$

$$\zeta_1 \text{ moyen} = \frac{D'\,\text{maxi} + D'\,\text{mini}}{4\,e} + \xi$$

$$G' = 2\,e\,(\zeta_2 - \xi)$$

$$\zeta_2 \text{ moyen} = \frac{G'\,\text{maxi} + G'\,\text{mini}}{4\,e} + \xi$$

puis on continue à tourner la roue jusqu'à ce qu'elle soit en poistion de $\zeta_1$ moyen (ou $\zeta_2$ moyen), on repose alors le véhicule sur le sol avec la roue dans cette position, après quoi le voile moyen est horizontal et le voile maximum est vertical, de sorte que le parallélisme n'est pas influencé.

3. Procédé selon l'une des revendications 1 et 2, dans lequel on réalise le dévoilage d'une roue arrière, caractérisé en ce qu'on lève le véhicule, on tourne la roue dans le sens de marche avant du véhicule, puis par l'intermédiaire des valeurs D' (ou G') lues, on détermine $\xi$ moyen pour chaque roue arrière sachant que lors de l'opération $\zeta_1$ ($\zeta_2$) est constant:

$$D' = 2\,e\,(\zeta_1 - \xi)$$

$$\xi \text{ moyen} = \zeta_1 - \frac{D'\,\text{mini} + D'\,\text{maxi}}{4\,e}$$
roue arrière droite

$$G' = 2\,e\,(\zeta_2 - \xi)$$

$$\xi \text{ moyen} = \zeta_2 - \frac{G'\,\text{mini} + G'\,\text{maxi}}{4\,e}$$
roue arrière gauche.

4. Appareil pour le contrôle du parallélisme des roues des trains avant et arrière d'un véhicule automobile, ainsi que pour la mesure du décalage axial entre les roues avant, ou »set-back«, caractérisé en ce qu'il comprend, pour chacune des roues avant, un bras horizontal supporté par la roue correspondante et à l'intérieur duquel est disposé un émetteur laser (5) associé à une lame séparatrice (8) capable de subdiviser le rayon laser (7) en un premier rayon horizontal (7a) situé dans la direction du rayon initial (7) émis et réfléchi à angle droit sur un premier miroir (9) transversalement devant le véhicule, et un second rayon (7b) réfléchi à angle droit sur un second miroir (11), vers un troisième miroir (12) porté par la roue arrière correspondante, le premier rayon (7a) frappant un premier récepteur (16) monté en face du premier miroir (9) sur l'extrémité du bras (4) porté par l'autre roue avant et le second rayon laser (7b) venant frapper un second récepteur (14) monté sur le même bras (3), l'appareil comportant en outre un calculateur électronique programmé pour déterminer automatiquement les valeurs angulaires relatives au parallélisme des roues avant et arrière ainsi que le set-back, à partir des informations enregistrées sur les 4 récepteurs (14, 16), en résolvant les quatre équations ci-dessous:

$$D = (v + 2c) \quad \zeta 2 + b + (\zeta 1 - \zeta 2)\, c$$

$$G = (v + 2c) \quad \zeta 1 - b - (\zeta 1 - \zeta 2)\, c$$

$$D' = 2e \quad (\zeta_1 - \xi)$$

$$G' = 2e \quad (\zeta_2 - \xi)$$

dont les solutions sont les suivantes:

$$\zeta^1 = \frac{D+G}{2(v+2c)} + \frac{D'-G'}{4e}$$

$$\zeta^2 = \frac{D+G}{2(v+2c)} - \frac{D'-G'}{4e}$$

$$2\xi = \frac{D+G}{v+2c} - \frac{D'+G'}{2e}$$

$$b = \frac{D-G}{2} + \frac{v(D'-G')}{4e}$$

les symboles utilisés ci-dessus ayant les significations ci-après:

$\zeta_1$ = angle de pincement ou d'ouverture de la roue avant droite
$\zeta_2$ = angle de pincement ou d'ouverture de la roue avant gauche
$2\xi$ = angle de pincement ou d'ouverture total des roues du train arrière
b = décalage entre les deux roues avant
c = distance entre les plans médians verticaus des roues avant et les plans verticaux contenant les rayons laser associés
v = voie
e = empatement du véhicule
D = distance enregistrée sur le récepteur (16) associé à la première roue avant, par exemple la roue droite (2), entre le point d'impact du premier rayon laser (7a) et le zéro de référence défini par l'emplacement qu'aurait le point d'impact du laser si les angles de pincement ou d'ouverture des roues avant étaient nuls et si le véhicule n'avait pas de set-back,
G = distance homologue de D enregistrée sur le récepteur (16) placé devant la seconde roue avant, par exemple la roue gauche (1),
D' = distance enregistrée sur le récepteur (14) associé à la roue avant droite (2), entre le point d'impact du rayon laser réfléchi par le miroir (12) placé au niveau de la roue arrière droite (15) et un zéro de référence défini par l'intersection du plan vertical contenant le rayon laser (18b) avant sa réflexion sur le miroir (12) et du plan vertical dudit récepteur,
G' = distance homologue de D' enregistrée sur le récepteur (14) placé au niveau de la roue avant gauche (1).

5. Appareil selon la revendication 4, caractérisé en ce que les premiers récepteurs (16) montés devant les roues avant (1, 2) sont des barrettes de diodes, de même que lesdits seconds récepteurs (14).

6. Appareil selon l'une des revendications 4 et 5, caractérisé en ce que chaque roue arrière (13, 15) est équipée d'un récepteur pourvu d'une barrette de diodes destinées à permettre la mesure du »crabe« du véhicule suivant la relation:

$$cr = \frac{(N-M) - e\,(\zeta_2 - \zeta_1)}{2}$$

où les distances N et M (figure 4B) sont déterminées par les signaux fournis à la suite des balayages des rayons laser correspondants (7b ou 18b)
$\zeta_1$ est l'angle de pincement ou d'ouverture de la roue avant droite (2),
$\zeta_2$ est l'angle de pincement ou d'ouverture de la roue avant gauche (1)
et e est l'empattement du véhicule.

7. Appareil selon l'une des revendications 4 à 6, caractérisé en ce que chaque type de véhicule à tester ayant un code propre, les données relatives à chaque type de véhicule sont stockées dans la mémoire du calculateur, et peuvent être extraites pour le contrôle d'un véhicule, en introduisant le code correspondant à ce véhicule par l'intermédiaire d'un clavier.

11

8. Appareil selon l'une des revendications 4 à 7, caractérisé en ce que dans le cas où les données relatives à un véhicule ne sont pas stockées dans la mémoire du calculateur, il est prévu un clavier adapté pour introduire ces données.

9. Appareil selon l'une des revendications 4 à 8, caractérisé en ce que le calculateur est pourvu d'un écran vidéo prévu pour afficher les caractéristique géométriques en cause du véhicule à tester, déterminées par le calculateur électronique, ledit écran vidéo pouvant en outre afficher des corrections à effectuer en fonction des valeurs relevées et des limites de fourchettes prévues par le constructeur du véhicule, et les valeurs indiquées sur l'écran pouvant être imprimées sur un ticket.

**Patentansprüche**

1. Verfahren zur Überprüfung der Parallelität der Räder des Vorder- und Hinterradgestells von Kraftfahrzeugen sowie zum Messen des axialen Versatzes oder »set-back« zwischen den Vorrädern, bei welchem in Höhe jedes Vorderrades (1, 2) eine Laserstrahlquelle (5) vorgesehen ist und von dieser mit jedem Vorderrad (1, 2) verbundenen Strahlquelle (5) ein Laserstrahl (7a, 18a) quer vor dem Fahrzeug in Richtung auf das andere Vorderrad abgegeben wird und der besagte Strahl auf einen Empfänger (16) trifft und von der mit einem Vorderrad (1) verbundenen Strahlquelle (5) ein dritter Laserstrahl (7b) auf einen in Höhe des entsprechenden Hinterrades (13) angeordneten reflektierenden Spiegel (12) geworfen wird und der reflektierte dritte Laserstrahl (7b) auf einen mit dem Vorderrad (1) verbundenen dritten Empfänger (14) fällt und dann an jedem mit einer Laserstrahlquelle verbundenen Empfänger der Abstand des Strahlauftreffpunktes zu einem Bezugsnullpunkt ermittelt wird, dadurch gekennzeichnet, daß

— der für jeden von der Strahlenquelle eines Vorderrades (1, 2) abgegebenen, quer vor dem Fahrzeug verlaufenden Laserstrahl (7a, 18a) vorgesehene Empfänger (1c) vor dem anderen Vorderrad (2, 1) angeordnet ist,

— von der Strahlenquelle des anderen Vorderrades (2) ein vierter Laserstrahl (18b) auf einen zweiten in Höhe des entsprechenden Hinterrades (15) angeordneten reflektierenden Spiegel (12) geworfen wird und der reflektierte vierte Laserstrahl (18b) auf einen am anderen Vorderrad (2) vorgesehenen vierten Empfänger fällt und der Abstand zwischen dem Auftreffpunkt des besagten Laserstrahls (18b) und einem Bezugsnullpunkt ermittelt wird,

— die ermittelten Abstände auf den vier Empfängern in einen elektronischen Rechner eingegeben werden, der anhand dieser Eingaben sowie der Spurweite und des Radstandes des Fahrzeuges den Spurwinkel der Vorder- und Hinterräder und den »set-back« bestimmt,

— zum Berechnen folgende Werte benutzt werden:
$\zeta_1$ = Spurwinkel des rechten Vorderrades,
$\zeta_2$ = Spurwinkel des linken Vorderrades,
$2\xi$ = Gesamtspurwinkel der Räder des Hinterradgestells, wobei alle diese Winkel durch Übereinkunft als positif oder negativ betrachtet werden, in Abhängigkeit von ihrer Lage zu Parallelen zur Winkelhalbierenden des Winkels der von den senkrechten axialen Ebenen der Hinterräder, wobei diese besagte Winkelhalbierende die Schubachse des Fahrzeuges bildet
b = Versatz zwischen den beiden Vorderrädern, der als positiv betrachtet wird, wenn das rechte Vorderrad vor dem linken Vorderrad liegt und als negativ im entgegengesetzten Fall, wobei dieser Versatz als »set-back« bezeichnet wird (oder umgekehrt entsprechend der Übereinkunft)
wobei folgende Parameter benutzt werden:
c = Abstand zwischen den senkrechten Mittelebenen der Vorderräder und den senkrechten die Laserstrahlen aufnehmenden Ebenen
v = Spurweite
e = Radstand des Fahrzeugs
— auf den beiden Empfängern jeder Laserstrahlquelle folgende Werte ablesbar sind:
D = Abstand auf dem Empfänger (16) des ersten Vorderrades beispielsweise des rechten Rades (2) zwischen dem Auftreffpunkt des ersten Laserstrahles (7a) und dem Bezugsnullpunkt, der durch den Punkt definiert ist, den der Auftreffpunkt des Laserstrahles einnähme, wenn der Spurwinkel der Vorderräder Null wäre und das Fahrzeug keinen »set-back« hätte,
G = entsprechender Abstand wie D auf dem vor dem zweiten Vorderrad beispielsweise dem linken Rad (1) angeordneten Empfänger (16) gemessen,
D' = Abstand auf dem Empfänger (14) des rechten Vorderrades (2) zwischen dem Auftreffpunkt des vom am rechten Hinterrad (15) angeordneten Spiegel (12) reflektierten Laserstrahles und einem Bezugsnullpunkt, der definiert ist durch den Schnittpunkt der senkrechten Ebene des Laserstrahles (18b) vor der Reflektion am Spiegel (12) und der senkrechten Ebene des besagten Empfängers,

G′ = entsprechender Abstand wie D′ auf dem in Höhe des linken Vorderrades (1) angeordneten Empfänger (14) und wobei folgende vier Gleichungen im Elektronenrechner gelöst werden:

$$D = (v + 2c) \quad \zeta_2 + b + (\zeta_1 - \zeta_2)\, c$$

$$G = (v + 2c) \quad \zeta_1 - b - (\zeta_1 - \zeta_2)\, c$$

$$D' = 2e \quad (\zeta_1 - \xi)$$

$$G' = 2e \quad (\zeta_2 - \xi)$$

ihre Lösungen lauten wie folgt:

$$\zeta_1 = (D + G)/(2(v + 2c)) + (D' - G')/(4e)$$

$$\zeta_2 = (D + G)/(2(v + 2c)) - (D' - G')/(4e)$$

$$2\xi = (D + G)/(v + 2c) - (D' - G')/(2e)$$

$$b = (D - G)/2 + (v(D' - G'))/(4e)$$

2. Verfahren nach Anspruch 1 zum Ausrichten eines Vorderrades, dadurch gekennzeichnet, daß das Fahrzeug angehoben und das Vorderrad in Fahrzeugfahrtrichtung gedreht wird und mittels der von den Empfängern abgelesenen Werten D′ (oder G′) der Mittelwert von $\zeta_1$ (oder von $\zeta_2$) bestimmt wird, wobei angenommen wird, daß dabei $\xi$ konstant bleibt:

$$D' = 2e\,(\zeta_1 - \xi)$$
$$\zeta_{1\,mittel} = (D'_{max} + D'_{min})/(4e) + \xi$$
$$G' = 2e\,(\zeta_2 - \xi)$$
$$\zeta_{2\,mittel} = (G'_{max} + G'_{min})/(4e) + \xi$$

und dann das Rad in die Stellung von $\zeta_{1\,mittel}$ (oder $\zeta_{2\,mittel}$) gedreht und das Fahrzeug mit dem Rad in dieser Position zurück auf den Boden gestellt wird, so daß der mittlere Schlag horizontal und der maximale Schlag vertikal derart ausgerichtet ist, daß die Parallelität nicht beeinflußt ist.

3. Verfahren nach Anspruch 1 oder 2 zum Ausrichten eines Hinterrades, dadurch gekennzeichnet, daß das Fahrzeug angehoben und das Rad in Fahrzeugfahrtrichtung gedreht wird und mittels der abgelesenen Werte D′ (oder G′) der Mittelwert von $\xi$ für jedes Rad bestimmt wird, wobei angenommen wird, daß dabei $\zeta_1$ ($\zeta_2$) konstant bleibt:

$$D' = 2e\,(\zeta_1 - \xi)$$
$$\xi_{mittel} = \zeta_1 - (D'_{min} + D'_{max})/(4e)$$
für das rechte Hinterrad
$$G' = 2e\,(\zeta_2 - \xi)$$
$$\xi_{mittel} = \zeta_2 - (G'_{min} + G'_{max})/(4e)$$
für das linke Hinterrad.

4. Vorrichtung zur Überprüfung der Parallelität der Räder des Vorder- und Hinterradgestells von Kraftfahrzeugen sowie zum Messen des axialen Versatzes oder »Set-Back« zwischen den Vorderrädern, dadurch gekennzeichnet, daß sie für jedes Vorderrad einen vom entsprechenden Rad getragenen horizontalen Arm aufweist, in dessen Inneren eine Laserstrahlquelle (5) vorgesehen ist, die mit einem Strahlteiler (8) verbunden ist, welcher den Laserstrahl (7) in einen ersten horizontalen, in Richtung des Ausgangsstrahles (7) verlaufenden, an einem ersten Spiegel (9) rechtwinklig reflektierten, quer vor dem Fahrzeug laufenden Strahl (7a) und einen zweiten rechtwinklig an einem zweiten Spiegel (11) reflektierten, auf einem dritten, am entsprechenden Hinterrad angebrachten Spiegel (12) fallenden Strahl (7b) teilt, wobei der erste Strahl (7a) auf einen ersten, am Ende des am anderen Vorderrad vorgesehenen Armes (4) dem ersten Spiegel (9) gegenüberliegenden Empfänger (16) fällt und der zweite Laserstrahl (7b) auf einen zweiten, am gleichen Arm (3) angebrachten Empfänger (14) fällt, wobei die Vorrichtung einen programmierbaren, elektronischen Rechner aufweist, zum atuomatischen Berechnen der Winkel relativ zur Parallelität der Vorder- und Hinterräder sowie das Set-Back anhand der Meßwerte der vier Empfänger (14, 16), indem folgende Gleichungen gelöst werden:

13

$$D = (v + 2c) \quad \zeta_2 + b + (\zeta_1 - \zeta_2) c$$

$$G = (v + 2c) \quad \zeta_1 - b - (\zeta_1 - \zeta_2) c$$

$$D' = 2e \quad (\zeta_1 - \xi)$$

$$G' = 2e \quad (\zeta_2 - \xi)$$

deren Lösungen wie folgt lauten:

$$\zeta_1 = (D + G)/(2 (v + 2 c)) + (D' - G')/(4 e)$$

$$\zeta_2 = (D + G)/(2 (v + 2 c)) - (D' - G')/(4 e)$$

$$2\xi = (D + G)/(v + 2 c) \quad\quad - (D' - G')/(2 e)$$

$$b = (D - G)/2 \quad\quad\quad + (v (D' - G'))/(4 e)$$

wobei die verwendeten Symbole folgende Bedeutungen haben:

| | | |
|---|---|---|
| $\zeta_1$ | = | Spurwinkel des rechten Vorderrades, |
| $\zeta_2$ | = | Spurwinkel des linken Vorderrades, |
| $2\xi$ | = | Gesamtspurwinkel der Räder, |
| b | = | Versatz zwischen den beiden Vorderrädern, |
| c | = | Abstand zwischen den senkrechten Mittelebenen der Vorderräder und den senkrechten, die Laserstrahlen aufnehmenden Ebenen, |
| v | = | Spurweite, |
| e | = | Radstand des Fahrzeuges, |
| D | = | Abstand auf dem Empfänger (16) des ersten Vorderrades, beispielsweise des rechten Rades (2) zwischen dem Auftreffpunkt des ersten Laserstrahles (7a) und dem Bezugsnullpunkt, der durch den Punkt definiert ist, den der Auftreffpunkt des Laserstrahles einnähme, wenn der Spurwinkel der Vorderräder Null wäre und das Fahrzeug keinen »Set-back« hätte, |
| G | = | entsprechender Abstand wie D auf dem vor dem zweiten Vorderrad beispielsweise dem linken Rad (1) angeordneten Empfänger (16) gemessen, |
| D' | = | Abstand auf dem Empfänger (14) des rechten Vorderrades (2) zwischen dem Auftreffpunkt des vom am rechten Hinterrad (15) angeordneten Spiegel (12) reflektierten Laserstrahles und einem Bezugsnullpunkt, der definiert ist durch den Schnittpunkt der senkrechten Ebene des Laserstrahles (18b) vor der Reflektion am Spiegel (12) und der senkrechten Ebene des besagten Empfängers, |
| G' | = | entsprechender Abstand wie D' auf dem in Höhe des linken Vorderrades (1) angeordneten Empfänger (14). |

5. Vorrichtung nach Anspruch 4, dadurch gekennzeichnet, daß die ersten vor den Vorderrädern (1, 2) angeordneten Empfänger (16) ebenso wie die besagten zweiten Empfänger (14) aus Diodenzeilen bestehen.

6. Vorrichtung nach Anspruch 4 oder 5, dadurch gekennzeichnet, daß jedes Hinterrad (13, 15) mit einem, eine Diodenzeile aufweisenden, Empfänger ausgestattet ist und die Messung des Maßes »cr« des Fahrzeuges erlaubt, und durch folgende Gleichung gegeben ist:

$$cr = ((N - M) - e (\zeta_2 - \zeta_1))/2$$

wobei N und M (Fig. 4B) durch Signale bei der Ablenkung der Laserstrahlen (7b oder 18b) bestimmt sind und $\zeta_1$ der Spurwinkel des rechten Vorderrades (2) und $\zeta_2$ der Spurwinkel des linken Vorderrades (1) ist und e der Radstand des Fahrzeuges ist.

7. Vorrichtung nach einem der Ansprüche 4 bis 6, dadurch gekennzeichnet, daß jedes zu testende Fahrzeug eine eigene Kennung aufweist, und die vorgegebenen Werte für jeden Fahrzeugtyp im Speicher des Rechners abgelegt sind und bei der Überprüfung eines Fahrzeuges durch Eingabe der dem Fahrzeug entsprechenden Kennung über eine Tastatur abrufbar sind.

8. Vorrichtung nach einem der Ansprüche 4 bis 7, dadurch gekennzeichnet, daß, falls die vorgegebenen Werte für einen Fahrzeugtyp nicht im Speicher des Rechners abgelegt sind, eine Tastatur zur Eingabe dieser Werte vorgesehen ist.

9. Vorrichtung nach einem der Ansprüche 4 bis 8, dadurch gekennzeichnet, daß der Rechner mit einem Bildschirm zur Anzeige der durch den elektronischen Rechner bestimmten geometrischen Kenngrößen des zu überprüfenden Fahrzeuges versehen ist, wobei auf dem Bildschirm auch die in Abhängigkeit von den gemessenen Werten und von dem vom Fahrzeug-Konstrukteur vorgegebenen

**0 015 826**

Grenzwerten erforderlichen Korrekturen darstellbar sind und sich die auf dem Bildschirm dargestellten Werte als Meßprotokoll ausdrucken lassen.

## Claims

1. Method for checking the alignment of the front and rear wheels of automotive vehicles as well as for measuring the relative axial displacement between the front wheels or »setback«, in which a laser beam emitter (5) is placed at the level of each front wheel (1, 2), a laser beam (7a, 18a) is projected from the emitter (5) associated with each front wheel (1,2) transversely in front of the vehicle towards the other front wheel, said beam being intended to impinge on a receiver (16), a third laser beam (7b) is projected from the same emitter (5) associated with one of the front wheels (1) towards a reflecting mirror (12) placed at the level of the corresponding rear wheel (13) and the third reflected laser beam (7b) is received in a third receiver (14) associated with the same front wheel (1), whereupon the distance between the point of impact of the laser beam and a reference zero is measured at each receiver associated with a laser emitter, characterized in that:

— the receiver (16) associated with each of the laser beams (7a, 18a) projected from the emitter of one front wheel (1, 2) transversely in front of the vehicle is placed in front of the other front wheel (2, 1),
— a fourth laser beam (18b) is also projected from the emitter of the other front wheel (2) towards a second reflecting mirror (12) placed at the level of the corresponding rear wheel (15) and the fourth reflected laser beam (18b) is received on a fourth receiver (14) associated with the same other front wheel (2) and the distance between the point of impact of said laser beam (18b) and a reference zero is measured,
— the distances measured at the four receivers are then introduced into an electronic computer which, on the basis of these data as well as the track width and wheel-base of the vehicle, determine the angles of toe-in or toe-out of the front and rear wheels and the »setback«,
— in order to calculate the following values:
$\delta_1$ = angle of toe-in or toe-out of the right-hand front wheel
$\delta_2$ = angle of toe-in or toe-out of the left-hand front wheel
$2\xi$ = total angle of toe-in or toe-out of the wheels of the rear-wheel system, all these angles being considered by convention as positive or negative as a function of their position-location on each side of lines parallel to the line bisecting the angle formed by the vertical axial planes of the rear wheels, said bisecting line being such as to constitute the axis of thrust of the vehicle,
b = relative displacement between the two front wheels, considered as positive if the right-hand front wheel is in a leading position with respect to the left-hand front wheel and negative in the contrary case, this relative displacement being designated as »setback« (or conversely according to the convention adopted)
on the basis of the following parameters:
c = distance between the vertical mid-planes of the front wheels and the vertical planes containing the associated laser beams
v = track width
e = wheel-base of the vehicle
the following data are recorded respectively in the two receivers associated with each laser emitter:
D = distance recorded in the receiver (16) associated with the first front wheel such as, for example, the right-hand wheel (2) between the point of impact of the first laser beam (7a) and the reference zero defined by the location or point at which the laser beam would have impinged if the toe-in or toe-out angles of the front wheels had been zero and if the vehicle had not exhibited any setback,
G = distance corresponding to D recorded in the receiver (16) which is placed in front of the second front wheel, for example the left-hand wheel (1),
D' = distance recorded in the receiver (14) associated with the right-hand front wheel (2) between the point of impact of the laser beam reflected from the mirror (12) placed at the level of the right-hand rear wheel (15) and a reference zero defined by the intersection of the vertical plane containing the laser beam (18b) prior to reflection of this latter from the mirror (12) and of the vertical plane of said receiver,
G' = distance corresponding to D' recorded in the receiver (14) placed at the level of the left-hand front wheel (1) and the four following equations are solved in the electronic computer:

$$D = (v + 2c) \quad \delta 2 + b + (\delta_1 - \delta_2) c$$

15

$$G = (v + 2c)\ \delta_1 - b - (\delta_1 - \delta_2)\ c$$

$$D' = 2e\ (\delta_1 - \xi)$$

$$G' = 2e\ (\delta_2 - \xi)$$

their solutions being as follows:

$$\delta_1 = \frac{D + G}{2(v + 2c)} + \frac{D' - G'}{4e}$$

$$\delta_2 = \frac{D + G}{2(v + 2c)} - \frac{D' - G'}{4e}$$

$$2\xi = \frac{D + G}{v + 2c} - \frac{D' + G'}{2e}$$

$$b = \frac{D - G}{2} + \frac{v(D' - G')}{4e}$$

2. Method in accordance with claim 1 in which truing of a front wheel is carried out, characterized in that the vehicle is lifted, the front wheel is caused to rotate in the direction of forward travel of the vehicle and, by means of the values D' (or G') read on the receivers, the mean value $\delta_1$ (or mean value $\delta_2$) is determined, given the fact that $\xi$ remains constant during this operation:

$$D' = 2e\ (\delta_1 - \xi)$$

$$\delta_1\ \text{mean} = \frac{D'\max + D'\min}{4e} + \xi$$

$$G' = 2e\ (\delta_2 - \xi)$$

$$\delta_2\ \text{mean} = \frac{G'\max + G'\min}{4e} + \xi$$

whereupon rotation of the wheel is continued until it is in the position of $\delta_1$ (mean) (or $\delta_2$ (mean)), the vehicle is then brought to rest on the ground with the wheel in this position, whereupon the mean out-of-true is horizontal and the maximum out-of-true is vertical, with the result that the alignment is not influenced.

3. Method in accordance with one of claims 1 and 2 in which truing of one rear wheel is carried out, characterized in that the vehicle is lifted, the wheel is rotated in the direction of forward travel of the vehicle and then, by means of the read values D' (or G'), $\xi$ (mean) is determined in the case of each rear wheel, given the fact that during the operation $\delta_1$ ($\delta_2$) is constant:

$$D' = 2e\ (\delta_1 - \xi)$$

$$\xi\ (\text{mean}) = \delta_1 - \frac{D'\min + D'\max}{4e}$$

right-hand rear wheel

$$G' = 2e\ (\delta_2 - \xi)$$

$$\xi\ (\text{mean}) = \delta_2 - \frac{G'\min + G'\max}{4e}$$

left-hand rear wheel.

4. Apparatus for checking the alignment of the front and rear wheel systems of an automotive vehicle as well as for measuring the relative axial displacement between the front wheels or »setback«, characterized in that it comprises in the case of each front wheel a horizontal arm which is supported by the corresponding wheel and within which is disposed a laser emitter (5) associated with a separating plate (8) capable of subdividing the laser beam (7) into a first horizontal beam (7a) located in the direction of the initial beam (7) which is emitted and reflected at right angles from a first mirror (9) transversely in front of the vehicle, and a second beam (7b) reflected at reight angles from a second

16

mirror (11) to a third mirror (12) carried by the corresponding rear wheel, the first beam (7a) being intended to impinge on a first receiver (16) mounted opposite to the first mirror (9) on the end of the arm (4) carried by the other front wheel and the second laser beam (7b) being intended to impinge on a second receiver (14) mounted on the same arm (3), the apparatus being further provided with an electronic computer which is programmed so as to determine automatically the angular values relating to the alignment of the front and rear wheels as well as the setback on the basis of items of information recorded on the four receivers (14, 16) by solving the four equations hereunder:

$$D = (v + 2c) \quad \delta_2 + b + (\delta_1 - \delta_2) c$$

$$G = (v + 2c) \quad \delta_1 - b - (\delta_1 - \delta_2) c$$

$$D' = 2e \quad (\delta_1 - \xi)$$

$$G' = 2e \quad (\delta_2 - \xi)$$

the solutions of which are as follows:

$$\delta_1 = \frac{D+G}{2(v+2c)} + \frac{D'-G'}{4e}$$

$$\delta_2 = \frac{D+G}{2(v+2c)} - \frac{D'-G'}{4e}$$

$$2\xi = \frac{D+G}{v+2c} - \frac{D'+G'}{2e}$$

$$b = \frac{D-G}{2} + \frac{v(D'-G')}{4e}$$

the meanings of the symbols employed in the foregoing being as follows:

$\delta_1$ = angle of toe-in or toe-out of the right-hand front wheel
$\delta_2$ = angle of toe-in or toe-out of the left-hand front wheel
$2\xi$ = total angle of toe-in or toe-out of the wheels of the rear-wheel system
b = relative displacement between the two front wheels
c = distance between the vertical mid-planes of the front wheels and the vertical planes containing the associated laser beams
v = wheel-track
e = wheel-base of the vehicle
D = distance recorded in the receiver (16) associated with the first front wheel, for example the right-hand wheel (2), between the point of impact of the first laser beam (7a) and the reference zero defined by the point at which the impact of the laser would have been located if the angles of toe-in or toe-out of the wheels had been zero and if the vehicle had not exhibited any setback,
G = distance corresponding to D recorded in the receiver (16) placed in front of the second front wheel, for example the left-hand wheel (1),
D' = distance recorded in the receiver (14) associated with the right-hand front wheel (2) between the point of impact of the laser beam reflected from the mirror (12) placed at the level of the right-hand rear wheel (15) and a reference zero defined by the intersection of the vertical plane containing the laser beam (18b) prior to reflection of this latter from the mirror (12) and of the vertical plane of said receiver,
G' = distance corresponding to D' recorded in the receiver (14) placed at the level of the left-hand front wheel (1).

5. Apparatus in accordance with claim 4, characterized in that the first receivers (16) mounted in front of the front wheels (1, 2) are diode strips as is also the case with said second receivers (14).

6. Apparatus in accordance with one of claims 4 and 5, characterized in that each rear wheel (13, 15) is equipped with a receiver provided with a strip of diodes which are intended to permit measurement of side-slip of the vehicle in accordance with the relation:

$$cr = \frac{(N-M) - e(\delta_2 - \delta_1)}{2}$$

17

where the distances N and M (figure 4B) are determined by the signals delivered as a result of the scanning operations performed by the corresponding laser beams (7b or 18b)

$\delta_1$ is the angle of toe-in or toe-out of the right-hand front wheel (2),

$\delta_2$ is the angle of toe-in or toe-out of the left-hand front wheel (1)

and e is the wheel-base of the vehicle.

7. Apparatus in accordance with one of claims 4 to 6, characterized in that, since each type of vehicle to be tested has a characteristic code, the data relating to each type of vehicle are stored in the memory of the computer and can be withdrawn for checking a vehicle by introducing the code corresponding to this vehicle by means of a keyboard.

8. Apparatus in accordance with one of claims 4 to 7, characterized in that, in the case in which the data relating to a vehicle are not stored in the computer memory, provision is made for a keyboard which is adapted to the introduction of these data.

9. Apparatus in accordance with one of claims 4 to 8, characterized in that the computer is provided with a video screen designed to display the relevant geometrical characteristics of the vehicle to be tested as determined by the electronic computer, said video screen being also capable of displaying corrections to be made as a function of the measured values and of the limits of ranges laid down by the vehicle manufacturer, and the values indicated on the screen can be printed on a ticket.

FIG_1

FIG_2

FIG_3

FIG_7

FIG_4

0 015 826

FIG_4A

18a

G

7a

7a

c

$\delta_1$

$\delta_2$

$\approx b$

$+$

$0 < \delta_1$

$\delta_2 > 0$

$D > 0$

$D' > 0$

$G' > 0$

14

5

c

$\delta_1$

$\delta_2$

$b$

$+$

5

14

7b

7b

B1

B2

18b

18b

FIG_4B

0 015 826

FIG_5

FIG_6